# DEMANDE DE BREVET EUROPEEN

(11) **EP 2 506 073 A1**
(43) Date de publication de la demande: **03.10.2012**
(21) Numéro de dépôt: 12290101.0
(22) Date de dépôt: 26.03.2012
(51) Int. Cl.: G03B 15/00, E01D 19/10, G01N 21/88

(54) **Dispositif de surveillance de l'état d'un ouvrage d'art**

(30) Priorité: 28.03.2011 FR 1100903
(71) Demandeur: Structure et Rehabilitation, 93170 Bagnolet (FR)
(72) Inventeur: Benslimane, Idriss, 78400 Chatou (FR); Foillard, René, 69830 Saint Georges de Reneins (FR); Remy, Pascal, 01320 Villette sur Ain (FR)
(74) Mandataire: Flavenot, Bernard

(57) **Abrégé**

La présente invention concerne les dispositifs de surveillance de l'état d'un ouvrage d'art 1.

Le dispositif selon l'invention est caractérisé par le fait qu'il comporte une cabine 10 située sur la superstructure 2, un bras 12 dont l'extrémité 16 est montée en rotation sur la cabine 10, une platine 18, des moyens de prise de vues 20 sur la platine 18 aptes à délivrer un signal représentatif d'une vue prise, un télémètre 27 orienté selon une direction 24 parallèle à la direction de l'axe optique 22, l'autre extrémité 30 du bras 12 étant montée en rotation sur la platine 18, un organe de commande et de traitement 32 comportant un terminal 132 monté dans la cabine 10 et une interface 133, et un écran de visualisation 34 connecté à l'organe de commande et de traitement 32.

Application à la surveillance de l'état d'ouvrages d'art comme des ponts, des barrages, des passerelles, des viaducs, des aqueducs, des écluses, des quais, des ports, des pertuis, des plateformes, des quais.

## Description

La présente invention concerne les dispositifs de surveillance de l'état d'un ouvrage d'art comportant une superstructure apte à définir une voie de déplacement, c'est-à-dire une partie de construction qui se situe au-dessus du terrain de base, ces dispositifs de surveillance permettant de détecter des fissures dans l'ouvrage, dans le but essentiel d'intervenir le plus tôt possible et éviter ainsi de plus graves désordres qui seraient alors irréversibles et dangereux pour les utilisateurs de cet ouvrage.

Sont appelés "ouvrages d'art" des ensembles architecturaux permettant de franchir un obstacle quel qu'il soit, rivière, montagne, voie ferrée, route..., ou de modifier le cours des éléments, par exemple barrages, digues,...

C'est ainsi que les principaux ouvrages d'art sont des ponts, des barrages, des passerelles, des viaducs, des aqueducs, des écluses, des quais, des ports, des pertuis, des plateformes, des quais ou analogues.

Ces ouvrages d'art se révèlent souvent cruciaux pour un territoire. Assurant à la fois la circulation des ressources humaines et matérielles, ils sont des vecteurs économiques importants pouvant être journellement empruntés par plusieurs milliers d'usagers. Il est donc évident que le contrôle de l'état de ces ouvrages d'art est essentiel pour en assurer leur pérennité.

Les dispositifs utilisés pour contrôler l'état d'un ouvrage d'art ont pour objectif de relever les éventuels désordres présentés par cet ouvrage, de les caractériser et de suivre leur évolution dans le temps, de manière à intervenir au moment opportun avant que l'ouvrage atteigne un état critique.

De tels dispositifs sont par exemple décrits et illustrés dans le JP-A-2005 090072. On peut aussi citer les dispositifs décrits et illustrés dans les JP-A-2006 002417, JP-A-2008 020426, US-A-2010/049367 et US 6 507 163. Cependant, les dispositifs décrits dans ces documents présentent un inconvénient majeur, à savoir le fait qu'ils permettent de qualifier les désordres comme des fissures ou analogues (présence ou non de fissures), mais ne permettent pas de les quantifier (longueurs, épaisseurs, profondeurs) alors que cette quantification est primordiale pour la gestion des ouvrages d'art.

Aussi, la présente invention a-t-elle pour but de réaliser un dispositif de surveillance de l'état d'un ouvrage d'art, qui pallie l'inconvénient mentionné ci-dessus des dispositifs de l'art antérieur, et qui en plus apporte des avantages non négligeables sur le plan de la rentabilité et de la qualité de cette surveillance.

Plus précisément, la présente invention a pour objet un dispositif de surveillance de l'état d'un ouvrage d'art selon les caractéristiques énoncées dans la première revendication annexée.

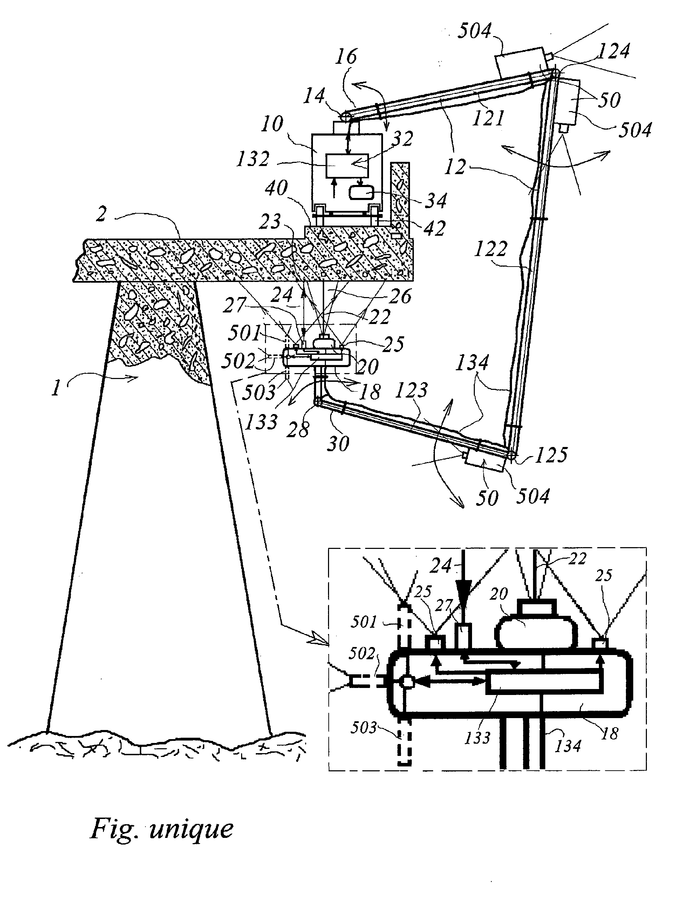

D'autres caractéristiques et avantages de la présente invention apparaîtront au cours de la description suivante donnée en regard des dessins annexés à titre illustratif mais nullement limitatif, dans lesquels :
La figure unique représente un schéma de principe d'un mode de réalisation du dispositif de surveillance de l'état d'un ouvrage d'art selon l'invention, appliqué à un pont, quand ce pont comporte un tablier supporté par au moins une pile, cette figure unique comportant en outre, en effet de loupe, une représentation d'une partie du dispositif selon ce mode de réalisation.

Il est précisé que, dans la présente description, si l'adverbe "sensiblement" est associé à un qualificatif d'un moyen donné, ce qualificatif doit être compris au sens strict ou approché.

En référence à la figure unique, la présente invention concerne un dispositif de surveillance de l'état d'un ouvrage d'art 1, en l'occurrence, à titre d'exemple, un pont comportant une superstructure 2, par exemple un tablier.

Le dispositif comporte une cabine 10 apte à être positionnée sur la superstructure 2, cette cabine étant agencée pour être apte à contenir un observateur, par exemple un technicien dans le domaine de l'inspection des ouvrages d'art.

Il comporte au moins un bras 12, des premiers moyens 14 pour monter une première extrémité 16 de ce bras en rotation autour d'au moins un axe de rotation par rapport à la cabine 10, ces premiers moyens de montage en rotation 14 étant aptes à délivrer un premier signal représentatif de la position du bras 12 par rapport à la cabine 10, et une platine 18.

Une telle platine 18 peut être de tout type, par exemple un boîtier apte à contenir différents éléments et à porter fixement sur sa paroi extérieure d'autres éléments, en précisant que certains de ces éléments peuvent être à la fois à l'intérieur du boîtier et émerger de celui-ci. La réalisation d'une telle platine est du domaine de l'homme du métier et ne sera pas plus amplement décrite ici, dans l'unique souci de simplifier la présente description.

Le dispositif comporte en outre des moyens de prise de vues numériques 20, ces moyens de prise de vues numériques ayant un champ de prise de vues divergent déterminé défini selon un axe optique 22.

Ces moyens de prise de vues numériques, comme un appareil photographique numérique connu sous le sigle "APN", sont montés en coopération avec la platine 18 de façon que son axe optique 22 ait une direction déterminée par rapport à la platine, et comportent une entrée de commande apte à recevoir un deuxième signal apte à les commander pour la prise d'au moins une vue.

De façon avantageuse, comme il est bien connu, ces moyens de prise de vues numériques 20 peuvent avantageusement comporter une mémoire pour enregistrer la vue qu'ils ont prise, ainsi que toutes les vues qu'ils pourraient être amenés à prendre ultérieurement.

Il est cependant possible, dans certains cas, que ces moyens de prise de vues numériques 20 soient aussi aptes à délivrer un troisième signal représentatif de la au moins une vue qu'ils ont prise après qu'ils aient été commandés par le deuxième signal, pour l'envoyer en cabine 10, soit dans un organe de commande et de traitement 32 tel que défini ci-après, soit sur un écran de visualisation 34, lui aussi défini ci-après, si par exemple l'observateur souhaite examiner cette vue dans les plus brefs délais. Cette possibilité est malgré tout relativement peu demandée, car il est très rare que l'observateur présent dans la cabine 10 veuille examiner la vue immédiatement après qu'elle ait été prise.

Il est également prévus un télémètre 27, par exemple du type à laser ou analogue. Ce télémètre est apte à mesurer des distances entre des points 23 éloignés de la platine 18, par exemple un point de l'ouvrage d'art 1, et un point de cette platine, selon une direction 24 sensiblement parallèle à la direction de l'axe optique 22. Ce télémètre est également apte à délivrer en sortie un quatrième signal représentatif de la distance mesurée.

Le dispositif selon l'invention comporte en outre des deuxièmes moyens 28 pour monter la seconde extrémité 30 du bras 12 en rotation autour d'au moins un axe de rotation par rapport à la platine 18, ces deuxièmes moyens de montage en rotation 28 étant aptes à délivrer en sortie un cinquième signal représentatif de la position de la platine par rapport au bras.

Comme il a été mentionné ci-avant, le dispositif comporte un organe de commande et de traitement 32 comportant un terminal 132 et au moins une interface 133. L'interface, qui peut être de tout type, depuis un simple connecteur jusqu'à un circuit électronique dit "entrée/sortie", est, par exemple comme illustré sur la figure unique, située au niveau de la platine 18, notamment dans le boîtier, et est reliée au terminal 132 par un organe de liaison 134 de type bus, transmission sans fil dite WI FI, etc.

Est également prévu un écran de visualisation 34 qui est disposé de façon à pouvoir être observé par l'observateur situé dans la cabine 10, et qui est connecté à l'organe de commande et de traitement 32.

Le terminal 132 est monté dans la cabine 10 pour recevoir et traiter les premier, troisième (quand il est présent), quatrième et cinquième signaux, et pour délivrer le deuxième signal.

Un tel terminal 132 est par exemple constitué à base de microprocesseur programmable, dont le programme sera aisément élaboré par un homme du métier connaissant notamment la structure des moyens constitutifs du dispositif selon l'invention et les buts à atteindre, comme ceux définis dans la présente description.

Le terminal 132 peut en outre être agencé pour mémoriser la au moins une vue prise par, par exemple l'APN, ainsi que la position du bras 10 par rapport à la cabine 10, la position de la platine 18 par rapport au bras 12, la position de la cabine 10 par rapport à la superstructure 2 et la position de la platine 18 par rapport à un point de l'ouvrage d'art 1, lors de l'instant de la prise de vue. Selon une première approche, la position de la cabine 10 par rapport à la superstructure 2 peut être définie manuellement. Cependant, selon une réalisation préférentielle qui sera donnée ci-après, elle sera obtenue de façon automatique.

Selon une autre réalisation préférentielle, pour permettre une inspection de l'ouvrage d'art 1 à des moments où la lumière ambiante est faible, ou même en en période nocturne, ou bien en des points de l'ouvrage situés dans un endroit sombre, le dispositif comporte en outre avantageusement des moyens de source lumineuse 25 aptes à émettre au moins un faisceau lumineux dans un champ d'éclairage divergent déterminé, ces moyens de source lumineuse étant commandés par un sixième signal délivré par le terminal 132, et des moyens pour monter ces moyens de source lumineuse 25 par rapport à la platine 18 de façon que le champ d'éclairage divergent et le champ de prise de vues divergent aient au moins une partie commune 26.

A titre d'exemple, ces moyens de source lumineuse 25 sont constitués par une diode lumineuse, ou plusieurs encadrant par exemple l'APN, comme évoqué sur la figure unique qui illustre une réalisation avec deux diodes électroluminescentes. De façon avantageuse, ces moyens de source lumineuse 25 émettent un faisceau lumineux dans la bande du visible.

De façon tout à fait préférentielle, surtout lorsque la superstructure de l'ouvrage d'art comporte une voie de déplacement 40, par exemple un trottoir, la cabine 10 est montée sur des moyens de transport 42, comme un véhicule automobile ou analogue, aptes à se déplacer sur cette voie de déplacement 40.

Un tel véhicule sera avantageusement de faible encombrement, notamment pour les inspections des intrados des ouvrages d'art 1, des appareils d'appui, des encorbellements et du haut des piles, mais aussi le haut des barrages et les évacuateurs de crues.

De façon préférentielle, pour permettre l'inspection de toutes les parties de l'ouvrage d'art, même celles en des endroits les plus inaccessibles par un être humain, le bras 12 est constitué d'un bras articulé, composé, selon la réalisation illustrée, d'au moins trois branches 121, 122, 123 reliées entre elles respectivement par des troisièmes et quatrièmes moyens de montage en rotation 124, 125 pour monter les branches en rotation respectivement les unes par rapport aux autres autour d'au moins un axe de rotation, ces troisièmes et quatrièmes moyens de montage en rotation étant aptes à délivrer respectivement des septième et huitième signaux représentatifs respectivement de la position d'une branche par rapport à celle qui lui est associée, ces septième et huitième signaux étant reçus et mémorisés dans le terminal 132 via l'organe de liaison 134.

De façon encore plus préférentielle, au moins l'une des branches 121, 122, 123 du bras 12, sinon toutes, est une branche télescopique, et le dispositif comporte alors en outre des moyens pour déterminer la longueur de cette branche télescopique. Ces moyens pour déterminer la longueur de la branche télescopique, bien connus en eux-mêmes, sont aptes à délivrer un neuvième signal, lui aussi reçu et mémorisé dans le terminal 132 via l'organe de liaison 134.

Selon une première réalisation possible, les moyens de prise de vues numériques 20 sont constitués par des moyens de prise de vues à angle de champ de prise de vues variable, par exemple un APN avec un zoom commandable par un signal électrique ou analogue, par exemple à partir du deuxième signal défini ci-avant.

Cependant, selon une autre réalisation possible, les moyens de prise de vues numériques sont constitués par des moyens de prise de vues à angle de champ de prise de vues de faible valeur et fixe, par exemple un APN avec un objectif à grande focale, et le dispositif comporte alors en outre des moyens de visualisation 50 à champ large montés en coopération avec la platine 18 de façon que le champ large des moyens de visualisation ait une partie commune avec le champ de prise de vues de faible valeur et fixe des moyens de prise de vues.

A titre d'exemple, selon une autre réalisation possible, les moyens de visualisation 50 à champ large montés en coopération avec la platine 18 comportent au moins trois micro-caméras 501, 502, 503 à champ large associées à la platine 18 en étant orientées selon au moins trois directions de vision sensiblement concourantes et non confondues, optionnellement cinq micro-caméras, c'est-à-dire : une vers le haut, une vers le bas, une vers l'horizon, et une de chaque côté de la platine 18, pour que l'observateur soit certain de pouvoir observer dans tout l'espace, aussi bien l'ouvrage d'art lui-même que son environnement, et de commander au moins une prise de vue de l'endroit de l'ouvrage d'art qu'il soupçonne comporter des failles ou analogues.

Ces micros caméras 501-503 servent donc à la visualisation spatiale et celle pointant vers le haut 501 sert aussi à la visualisation des surfaces inspectées ou à inspecter.

La platine, articulée de préférence sur rotule comme mentionné ci-après, se manoeuvrera dans les trois directions cartésiennes x, y et z à l'aide par exemple d'un joystick dans la cabine 10.

Selon une autre réalisation possible et avantageuse dans certains cas, les moyens de visualisation à champ large montés en coopération avec la platine 18 comportent au moins une première micro-caméra 504 à champ large associée au bras 12, trois dans le cas du bras à trois branches tel qu'illustré, et une seconde micro-caméra (par exemple la micro-caméra 501) à champ large associée à la platine 18 en étant orientée selon une direction de vision sensiblement parallèle à l'axe optique 22.

De façon encore plus préférentielle, pour répondre à toutes les demandes et toutes les structures d'un tel ouvrage d'art 1, au moins l'un des premiers, deuxièmes, troisièmes et quatrièmes moyens de montage en rotation 14, 28, 124, 125, de préférence tous, sont des moyens de rotation à au moins deux axes de rotation non confondus, optionnellement constitués par une rotule à laquelle est associé, par exemple, un codeur angulaire générant les premier, cinquième, septième et huitième signaux définis précédemment.

De façon tout à fait préférentielle, notamment lorsque la cabine 10 est montée sur un véhicule 42, le dispositif selon l'invention comporte en outre des moyens pour déterminer la position de la cabine 10 par rapport à un référentiel donné, dans lequel l'ouvrage d'art 1 est lui aussi référencé, par exemple le référentiel de Galilée, et des moyens (par exemple de type GPS) pour délivrer un dixième signal représentatif de la position de la cabine 10 dans ce référentiel, ce dixième signal étant reçu et mémorisé dans le terminal 132.

Le fonctionnement du dispositif selon l'invention tel que décrit ci-dessus, ne sera pas spécifiquement décrit ici car il se déduit sans aucune difficulté, pour un homme du métier, de la description de sa structure.

Accessoirement, il est cependant mentionné que les moyens de prise de vues 20, comme un APN, se trouvant sur la platine 18 à la seconde extrémité du bras articulé 12 seront en permanence orientés dans l'espace de façon connue afin d'obtenir une cartographie à l'aide des images référencées dans l'espace et donc une localisation des désordres (fissures, épaufrures, aciers apparents, traces d'humidité, de calcite, ...).

En outre, de façon très avantageuse et primordiale, le télémètre 27, en combinaison avec les moyens de prise de vues comme une caméra ou analogue, permet de déterminer, via par exemple un calcul trigonométrique, la taille (longueur, largeur, profondeur) des fissures ou analogues détectées et photographiées, et donc de mieux appréhender les conséquences sur l'état de l'ouvrage d'art dues à la présence de telles fissures et de décider s'il est nécessaire ou non d'intervenir sur l'ouvrage.

Il est également à noter qu'il pourra être effectué un traitement automatique des signaux définis ci-dessus et reçus par le terminal 132, de façon à apporter aux personnes responsables de l'entretien de l'ouvrage d'art un suivi de l'état de l'ouvrage, efficace dans le temps et reproductible, tout au long de la durée de vie de l'ouvrage. Pour cela, les photos haute résolution qui sont prises pourront être ensuite exploitées par un logiciel d'exploitation, par exemple le logiciel connu sous la dénomination commerciale MOSAÏQUE. Un tel logiciel permet la recomposition automatique des photos, puis la recherche des désordres. Les photos recomposées, avec les désordres, sont ensuite transférées sur les plans de l'ouvrage. Ainsi, la position de chacun des désordres est parfaitement connue et, lors d'une inspection ultérieure, il sera possible de comparer son évolution.

Le but premier de ces inspections est essentiellement de rechercher la totalité des désordres sur l'ensemble de la structure de l'ouvrage d'art, par exemple relever des fissures de l'ordre de 0,1 millimètre pour les ponts métalliques ou précontraints, des fissures de l'ordre de 0,3 millimètres pour les ponts en béton et des fissures de l'ordre du millimètre pour les ponts en maçonnerie ou pour les barrages. On recherchera des détails plus fins dans les zones à fort champ de contrainte, dans lesquelles un désordre de 0,1 millimètre aura autant d'importance qu'un désordre de 0,3 millimètres dans d'autres zones. Le besoin de précision, quant à la localisation d'un désordre, va dans le même sens : 15 centimètres max. dans les zones «sensibles» et 50 centimètres dans les autres.

A la lecture de la description ci-dessus, il apparaît aisément que, par rapport aux procédés de l'art antérieur décrits au préambule, l'utilisation du dispositif selon l'invention permet d'obtenir un diagnostic de l'état d'un ouvrage d'art, beaucoup plus facilement, beaucoup plus rapidement et en toute sécurité pour les observateurs en charge de l'inspection de cet ouvrage, en tous points de l'ouvrage, même ceux situés dans des zones difficiles d'accès, par exemple l'intrados d'un pont qui est une zone ultrasensible de l'ouvrage, la paroi de certains barrages, etc., avec un gain économique évident, une grande traçabilité et une reproductibilité indépendante de l'intervention humaine.

## Revendications

1. Dispositif de surveillance de l'état d'un ouvrage d'art (1) comportant une superstructure (2), comportant :
• une cabine (10) apte à être positionnée sur la superstructure (2), ladite cabine étant agencée pour contenir un observateur,
• un bras (12),
• des premiers moyens (14) pour monter en rotation une première extrémité (16) du dit bras (12) autour d'au moins un axe de rotation par rapport à ladite cabine (10), lesdits premier moyens de montage en rotation (14) étant aptes à délivrer un premier signal représentatif de la position du dit bras par rapport à ladite cabine,
• une platine (18),
• des moyens de prise de vues numériques (20), lesdits moyens de prise de vues numériques ayant un champ de prise de vues divergent déterminé défini sur un axe optique (22), ces dits moyens de prise de vues numériques étant montés en coopération avec ladite platine (18) de façon que l'axe optique ait une direction déterminée par rapport à ladite platine et comportant une entrée de commande apte à recevoir un deuxième signal pour commander la prise d'au moins une vue par lesdits moyens de prise de vues numériques,
• des deuxièmes moyens (28) pour monter en rotation la seconde extrémité (30) du dit bras autour d'au moins un axe de rotation par rapport à la platine (18), ces dits deuxièmes moyens de montage en rotation étant aptes à délivrer en sortie un cinquième signal représentatif de la position de ladite platine par rapport au dit bras,
• un organe de commande et de traitement (32) comportant un terminal (132) et au moins une interface (133), ledit terminal étant monté dans la cabine (10) pour recevoir et traiter lesdits premier, quatrième et cinquième signaux, et pour délivrer ledit deuxième signal, et
• un écran de visualisation (34) connecté au dit organe de commande et de traitement,
**caractérisé par le fait qu'**il comporte en outre un télémètre (27) pour mesurer des distances entre des points (23) éloignés de ladite platine et un point de ladite platine, ces dites mesures étant faites selon une direction sensiblement parallèle à la direction (29) du dit axe optique (22), ce télémètre étant apte à délivrer en sortie un quatrième signal représentatif de la distance mesurée.

2. Dispositif selon la revendication 1, **caractérisé par le fait qu'**il comporte en outre des moyens de source lumineuse (25) aptes à émettre un faisceau lumineux dans un champ d'éclairage divergent déterminé, ces dits moyens de source lumineuse étant commandés par un sixième signal délivré par ledit terminal (132), et des moyens pour monter lesdits moyens de source lumineuse (25) par rapport à ladite platine (18) de façon que ledit champ d'éclairage divergent et le champ de prise de vues divergent aient au moins une partie commune (26).

3. Dispositif selon l'une des revendications 1 et 2, **caractérisé par le fait que**, lorsque ladite superstructure comporte une voie de déplacement (40), ladite cabine (10) est montée sur des moyens de transport (42) aptes à se déplacer sur cette voie de déplacement (40).

4. Dispositif selon l'une des revendications précédentes, **caractérisé par le fait que** ledit bras (12) est un bras articulé, composé d'au moins trois branches (121, 122, 123) reliées entre elles respectivement par des troisièmes et quatrièmes moyens de montage en rotation (124, 125), lesdits troisièmes et quatrièmes moyens de montage en rotation étant aptes à monter les branches en rotation respectivement les unes par rapport aux autres autour d'au moins un axe de rotation et étant aptes à délivrer respectivement des septième et huitième signaux représentatifs respectivement de la position d'une branche par rapport à celle qui lui est associée, ces septième et huitième signaux étant reçus dans ledit terminal (132).

5. Dispositif selon la revendication 4, **caractérisé par le fait qu'**au moins l'une des dites branches (121, 122, 123) du dit bras (12) est une branche télescopique, et qu'il comporte des moyens pour déterminer la longueur de cette branche télescopique, ces moyens pour déterminer la longueur de la branche télescopique étant aptes à délivrer un neuvième signal, ce neuvième signal étant reçu dans ledit terminal (132).

6. Dispositif selon l'une des revendications précédentes, **caractérisé par le fait que** les moyens de prise de vues numériques sont constitués par des moyens de prise de vues à angle de champ de prise de vues variable.

7. Dispositif selon l'une des revendications précédentes 1 à 5, **caractérisé par le fait que** les moyens de prise de vues numériques sont constitués par des moyens de prise de vues à angle de champ de prise de vues de faible valeur, et qu'il comporte en outre des moyens de visualisation (50) à champ large montés en coopération avec ladite platine (18) de façon que le champ large des moyens de visualisation ait une partie commune avec le champ de prise de vues des moyens de prise de vues.

8. Dispositif selon la revendication 7, **caractérisé par le fait que** les moyens de visualisation à champ large montés en coopération avec ladite platine (18) comportent au moins trois micro-caméras (501, 502, 503) à champ large associées à ladite platine (18) en étant orientées selon au moins trois directions de vision sensiblement concourantes et non confondues, optionnellement cinq micro-caméras.

9. Dispositif selon la revendication 7, **caractérisé par le fait que** les moyens de visualisation à champ large montés en coopération avec ladite platine (18) comportent au moins une première micro-caméra (504) à champ large associée au dit bras (12) et une seconde micro-caméra (501, 502, 503) à champ large associée à ladite platine (18) en étant orientée selon une direction de vision sensiblement parallèle au dit axe optique (22).

10. Dispositif selon l'une des revendications précédentes quand elle dépend de la revendication 2, **caractérisé par le fait que** les moyens de source lumineuse (25) émettent un faisceau lumineux dans le visible.

11. Dispositif selon l'une des revendications précédentes quand elle dépend de la revendication 4, **caractérisé par le fait qu'**au moins l'un des premiers, deuxièmes, troisièmes et quatrièmes moyens de montage en rotation (14, 28, 124, 125) sont des moyens de rotation à au moins deux axes de rotation non confondus.

12. Dispositif selon l'une des revendications précédentes, **caractérisé par le fait qu'**il comporte des moyens pour déterminer la position de ladite cabine (10) par rapport à un référentiel donné, dans lequel ledit ouvrage d'art (1) est référencé, et pour délivrer un dixième signal représentatif de la position de la cabine (10), ce dixième signal étant reçu dans ledit terminal (132).

13. Dispositif selon l'une des revendications précédentes, **caractérisé par le fait que** lesdits moyens de prise de vues numériques (20) comportent en outre une sortie apte à délivrer un troisième signal représentatif de ladite au moins une vue prise par les moyens de prise de vues numériques (20) après qu'ils aient été commandés par ledit deuxième signal, ce dit troisième signal étant reçu dans ledit terminal (132).
